# EUROPEAN PATENT APPLICATION

(11) **EP 3 560 765 A1**
(43) Date of publication of application: **30.10.2019**
(21) Application number: 19165368.2
(22) Date of filing: 27.03.2019
(51) Int. Cl.: B60R 16/02, H01B 7/08

(54) **WIRE HARNESS**

(30) Priority: 25.04.2018 JP 2018084037
(71) Applicant: YAZAKI CORPORATION, Minato-ku, Tokyo 108-8333 (JP)
(72) Inventor: OGURA, Hiroyuki, Makinohara-shi, Shizuoka 421-0407 (JP)
(74) Representative: Grünecker Patent- und Rechtsanwälte PartG mbB

(57) **Abstract**

In a wire harness (1), an electric wire conductor (110a) is formed in an elongated and flat shape, extends along an extending direction, and has one end connected to a positive electrode side of a battery. A ground conductor (111a) is formed in an elongated and flat shape, extends along the extending direction, is insulatively stacked on the electric wire conductor (110a), and has one end connected to a negative electrode side of the battery. The communication conductor (120a) is formed in an elongated shape, extends along the extending direction, and is insulatively stacked on the ground conductor (111a) on the side opposite to the electric wire conductor (110a) side. The dielectric (D1) is provided between the communication conductor (120a) and the ground conductor (111a) and has a predetermined dielectric constant. The communication conductor (120a), the dielectric (D1), and the ground conductor (111a) constitute the microstrip line (ML) capable of transmitting the signal.

## Description

### BACKGROUND OF THE INVENTION

### 1. Field of the invention

The present invention relates to a wire harness.

### 2. Description of the Related Art

Conventionally, Japanese Patent No. 6083483 discloses a stacked multicore cable configured to include a plurality of strip lines for communication as a wire harness, for example. In this stacked multicore cable, crosstalk is suppressed by providing signal line paths of the respective strip lines in different layers.

Meanwhile, there is a case where the above-described stacked multicore cable described in Japanese Patent No. 6083483 is routed in parallel with a power line for supplying electric power of a power supply to a load portion, for example. In this case, it is desired to save space for the stacked multicore cable and the power line.

### SUMMARY OF THE INVENTION

Therefore, the present invention has been made in view of the above description, and an object thereof is to provide a wire harness capable of realizing space saving of a power line and a communication line.

In order to solve the above mentioned problem and achieve the object, a wire harness according to one aspect of the present invention includes an electric wire conductor that is formed in an elongated and flat shape, extends along an extending direction, and has one end connected to a positive electrode side of a power supply; a ground conductor that is formed in an elongated and flat shape, extends along the extending direction, insulatively stacked on the electric wire conductor, and has one end connected to a negative electrode side of the power supply; a communication conductor that is formed in an elongated shape, extends along the extending direction, and is insulatively stacked on the ground conductor on a side opposite to a side of the electric wire conductor; and a dielectric that is provided between the communication conductor and the ground conductor and has a predetermined dielectric constant, wherein the communication conductor, the dielectric, and the ground conductor constitute a microstrip line capable of transmitting a signal.

According to another aspect of the present invention, in the wire harness, it is preferable that the microstrip line is configured to include a trunk line mounted on a vehicle and extending in a front-rear direction of the vehicle and a branch line branching from the trunk line and extending in a direction crossing the front-rear direction.

According to still another aspect of the present invention, in the wire harness, it is preferable that the communication conductor is configured to include a first communication conductor and a second communication conductor different from the first communication conductor, and the first communication conductor and the second communication conductor are arranged side by side in a direction crossing the extending direction and perform differential transmission to transmit a signal using a potential difference between the conductors caused by flow of currents having mutually opposite phases.

In order to achieve the object, a wire harness according to still another aspect of the present invention includes an electric wire conductor that is formed in an elongated and flat shape, extends along an extending direction, and has one end connected to a positive electrode side of a power supply; a first ground conductor that is formed in an elongated and flat shape, extends along the extending direction, insulatively stacked on the electric wire conductor, and has one end connected to a negative electrode side of the power supply; a communication conductor that is formed in an elongated shape, extends along the extending direction, and is insulatively stacked on the first ground conductor on a side opposite to a side of the electric wire conductor; a second ground conductor that is formed in an elongated and flat shape, extends along the extending direction, is insulatively stacked on the communication conductor on a side opposite to a side of the first ground conductor, and has one end connected to the negative electrode side of the power supply; and a dielectric that is provided between the first ground conductor and the second ground conductor and has a predetermined dielectric constant, wherein the communication conductor, the dielectric, the first ground conductor, and the second ground conductor constitute a strip line capable of transmitting a signal.

According to still another aspect of the present invention, in the wire harness, it is preferable that the strip line is configured to include a trunk line mounted on a vehicle and extending in a front-rear direction of the vehicle and a branch line branching from the trunk line and extending in a direction crossing the front-rear direction.

According to still another aspect of the present invention, in the wire harness, it is preferable that the communication conductor is configured to include a first communication conductor and a second communication conductor different from the first communication conductor, and the first communication conductor and the second communication conductor are arranged side by side in a direction crossing the extending direction and perform differential transmission to transmit a signal using a potential difference between the conductors caused by flow of currents having mutually opposite phases.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a plan view of a vehicle according to a first embodiment;
FIG. 2 is a cross-sectional view of a wire harness according to the first embodiment; and
FIG. 3 is a cross-sectional view of a wire harness according to a second embodiment.

### DETAILED DESCRIPTION OF THE PREFERRED EMBODIMENTS

Modes (embodiments) for carrying out the present invention will be described in detail with reference to the drawings. The present invention is not limited by contents described in the following embodiments. In addition, constituent elements described below include constituent elements that can be easily assumed by those skilled in the art and constituent elements that are substantially the same. Further, configurations described below can be appropriately combined. In addition, various omissions, substitutions, or changes of the configurations can be made within a scope not departing from a gist of the present invention.

### First Embodiment

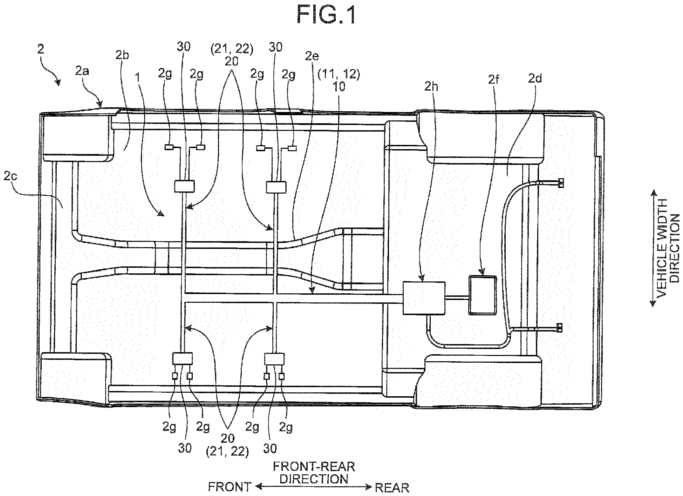

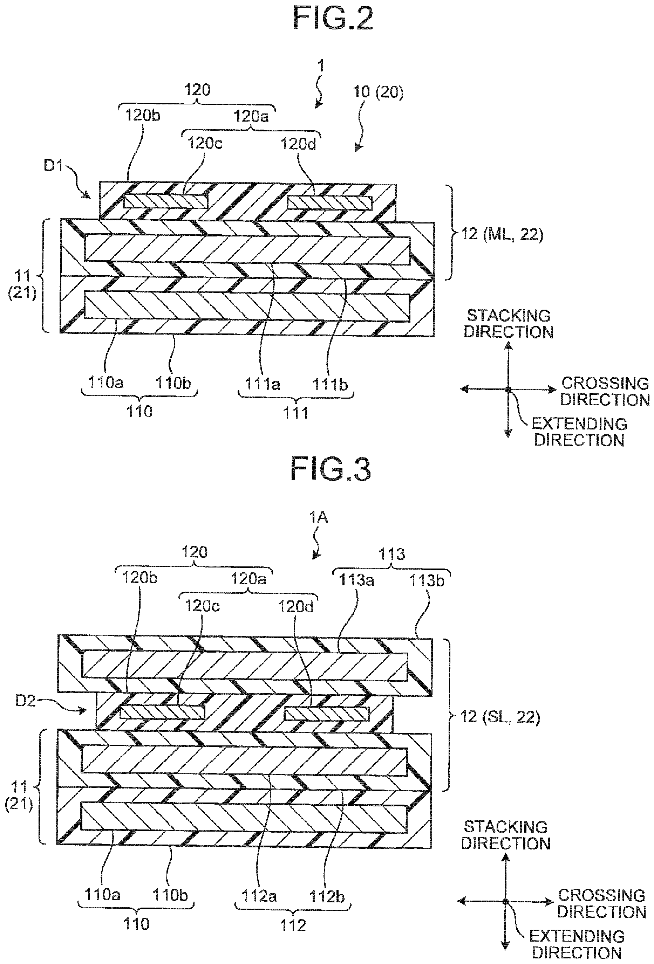

A wire harness 1 according to a first embodiment will be described. The wire harness 1 is applied to a vehicle 2, for example, automobiles including a hybrid car, an electric car, and the like. For example, the wire harness 1 is wired on a floor panel 2a of the vehicle 2 and connects a battery 2f mounted on the vehicle 2 and each of electronic devices 2g so as to enable power transmission. In addition, the wire harness 1 connects, for example, a power supply control unit 2h mounted on the vehicle 2 and the respective electronic devices 2g so as to enable communication. As illustrated in FIG. 1, the wire harness 1 includes a trunk line 10, a plurality of branch lines 20, and a plurality of distributors 30. As illustrated in FIG. 2, the trunk line 10 is configured to include a power supply trunk line 11 and a communication trunk line 12, and each of the branch lines 20 is configured to include a power supply branch line 21 and a communication branch line 22.

Here, a direction along the front and rear of the vehicle 2 is referred to as a front-rear direction. A direction along a width of the vehicle 2 is referred to as a vehicle width direction. A direction along a height of the vehicle 2 is referred to as a height direction. Further, the front-rear direction, the vehicle width direction, and the height direction are typically orthogonal to each other, but are not limited thereto. In addition, a direction in which the power supply trunk line 11 (power supply branch line 21) extends is referred to as an extending direction. A direction crossing the extending direction is referred to as a crossing direction. A direction in which the power supply trunk line 11 and the communication trunk line 12 are stacked is referred to as a stacking direction. Further, the extending direction, the crossing direction, and the stacking direction are typically orthogonal to each other, but are not limited thereto.

The floor panel 2a is a member constituting the floor of the vehicle 2. The floor panel 2a is supported by wheels of the vehicle 2 via a suspension. The floor panel 2a is configured to include a body portion 2b, a front ridge portion 2c, a rear ridge portion 2d, and a tunnel portion 2e. The body portion 2b is a flat plate-shaped constituent portion. The front ridge portion 2c is connected to a front end of the body portion 2b and is raised to the upper side in the height direction. The rear ridge portion 2d is connected to a rear end of the body portion 2b and is raised to the upper side in the height direction. The tunnel portion 2e is provided at a center portion in the vehicle width direction, extends in the front-rear direction, and protrudes to the upper side in the height direction with respect to the body portion 2b.

The battery 2f is a power supply of the vehicle 2.
The battery 2f is a power storage device that can be charged and discharged. A voltage of the battery 2f of the present embodiment is, for example, 12 V. The battery 2f is arranged, for example, in a rear portion of the vehicle 2, but is not limited thereto. The battery 2f is electrically connected to the electronic devices 2g arranged in each unit of the vehicle 2 via the wire harness 1. Examples of the electronic devices 2g include a device of a traveling system such as a steering wheel, a device of a safety system such as an airbag, a device of a body system such as a door lock, a device of a multimedia system such as an audio, and the like. The battery 2f supplies power to each of the electronic devices 2g via the wire harness 1 or is charged with power supplied via the wire harness 1.

The power supply control unit 2h is a control device that controls charging and discharging of the battery 2f. The power supply control unit 2h is arranged on the front side relative to the battery 2f in the rear ridge portion 2d. The power supply control unit 2h and the battery 2f are connected via a power supply line and a signal line. The power supply control unit 2h has a power supply monitoring function, a current cut-off function, a power supply backup function, and the like. The power supply control unit 2h supplies, for example, the power supplied from the battery 2f to each of the electronic devices 2g via the power supply trunk line 11 and the power supply branch line 21. In addition, the power supply control unit 2h communicates with the distributor 30 and the electronic device 2g. The power supply control unit 2h is connected to the distributor 30 via the communication trunk line 12 and the communication branch line 22. The power supply control unit 2h transmits, for example, a command signal, which controls the supply of power with respect to each of the electronic devices 2g, to the distributor 30.

The power supply trunk line 11 is a conductor through which a current for power supply flows. The power supply trunk line 11 extends in the front-rear direction along an upper surface of the floor panel 2a. A rear end of the power supply trunk line 11 is connected to a connection terminal of the power supply control unit 2h. A front end of the power supply trunk line 11 is connected to the power supply branch line 21 at the front of the vehicle 2. In this manner, the power supply trunk line 11 is a main power supply line as a so-called power supply backbone extending to the front of the vehicle 2 along the front-rear direction from the battery 2f arranged in the rear portion of the vehicle 2. For example, the power supply trunk line 11 allows a current flowing from the battery 2f via the power supply control unit 2h to flow to each of the power supply branch lines 21.

Each of the power supply branch lines 21 is a conductor through which a current for power supply flows. Each of the power supply branch lines 21 electrically connects the power supply trunk line 11 and the electronic device 2g. Each of the power supply branch lines 21 branches from the power supply trunk line 11 and extends along the vehicle width direction. In each of the power supply branch lines 21, an end on the power supply trunk line 11 side is connected to the power supply trunk line 11 and an end opposite to the power supply trunk line 11 side is connected to a connection terminal of the distributor 30. Each of the power supply branch lines 21 causes a current to flow from the power supply trunk line 11 side to the distributor 30.

The communication trunk line 12 is a signal transmission path capable of transmitting (propagating) a signal. The communication trunk line 12 is stacked on the power supply trunk line 11 in the state of also serving as a ground conductor 111a of the power supply trunk line 11 as will be described later. The communication trunk line 12 extends along the front-rear direction together with the power supply trunk line 11. A rear end of the communication trunk line 12 is connected to the connection terminal of the power supply control unit 2h. A front end of the communication trunk line 12 is connected to each of the communication branch lines 22 at the front of the vehicle 2. In this manner, the communication trunk line 12 is the main signal transmission path as a so-called power supply backbone extending to the front of the vehicle 2 along the front-rear direction from the power supply control unit 2h arranged in the rear portion of the vehicle 2. For example, the communication trunk line 12 transmits the command signal transmitted from the power supply control unit 2h to the communication branch line 22.

The communication branch line 22 is a signal transmission path capable of transmitting (propagating) a signal. Each of the communication branch lines 22 branches from the communication trunk line 12 and extends along the vehicle width direction. The communication branch line 22 is connected to the connection terminal of the distributor 30. In other words, the communication branch line 22 is a communication branch line that connects the communication trunk line 12 and each of the distributors 30 to enable wired communication. The communication branch line 22 transmits, for example, the command signal transmitted via the communication trunk line 12 to the distributor 30.

The distributor 30 is, for example, a junction box, and has a function of distributing the power supplied from the power supply branch line 21 to each of the electronic devices 2g and a function of receiving communication from the communication branch line 22 and distributing the received communication to each of the electronic devices 2g. The distributor 30 is provided, for example, for each area or for each function. For example, an internal space of the vehicle 2 is divided into a plurality of areas, and the distributor 30 corresponding to each area is provided in each area. The distributor 30 includes connection terminals to which the power supply branch line 21, the communication branch line 22, and the electronic device 2g are respectively connected, each component such as a communication unit, a control unit, a relay, and a fuse, and a housing that accommodates the respective components.

Here, detailed configuration examples of the trunk line 10 and the branch line 20 in the wire harness 1 will be described. Incidentally, the trunk line 10 and the branch line 20 have different sizes of line widths or the like, but have no difference in terms of the configuration, and thus, the trunk line 10 and the branch line 20 will be described without discrimination unless otherwise specified. The power supply trunk line 11 and the power supply branch line 21 are configured to include a power line 110 and a ground line 111 (see FIG. 2). The power line 110 and the ground line 111 are stacked and fixed along the stacking direction. The power line 110 is configured to include an electric wire conductor 110a and an electric wire conductor covering portion 110b, and the ground line 111 is configured to include the ground conductor 111a and a ground conductor covering portion 111b.

The electric wire conductor 110a is a conductor through which a current flows, and is formed in an elongated and flat shape. For example, the electric wire conductor 110a has a rectangular sectional shape. The electric wire conductor 110a extends along the extending direction, and an outer periphery of the electric wire conductor 110a is covered with the electric wire conductor covering portion 110b. The electric wire conductor 110a has one end connected to a positive electrode side of the battery 2f via the power supply control unit 2h, and the other end connected to the connection terminal of the distributor 30. That is, the one end of the electric wire conductor 110a is connected to the positive electrode side of the battery 2f, and the other end is connected to a load portion side. The electric wire conductor 110a causes a current to flow from the positive electrode side of the battery 2f to the distributor 30.

The electric wire conductor covering portion 110b covers the electric wire conductor 110a. The electric wire conductor covering portion 110b is formed of an insulating material such as resin and covers the outer periphery of the electric wire conductor 110a. The electric wire conductor covering portion 110b is formed in a flat shape, for example, and a sectional shape of the electric wire conductor covering portion 110b is formed in a rectangular shape. The electric wire conductor covering portion 110b covers the outer periphery of the electric wire conductor 110a and insulates the electric wire conductor 110a from the outside.

The ground conductor 111a is a conductor and is formed in an elongated and flat shape. For example, the ground conductor 111a is formed in the same shape and the same size as those of the electric wire conductor 110a. That is, a sectional shape of the ground conductor 111a is formed in a rectangular shape having the same size as that of the electric wire conductor 110a. The ground conductor 111a extends in the extending direction and is insulatively stacked on the electric wire conductor 110a. In the ground conductor 111a, the outer periphery of the ground conductor 111a is covered with the ground conductor covering portion 111b. The ground conductor 111a is connected to a reference potential (for example 0 V) side. For example, the ground conductor 111a has one end connected to the negative electrode side of the battery 2f via the power supply control unit 2h, and the other end connected to the connection terminal of the distributor 30. That is, the one end of the ground conductor 111a is connected to the negative electrode side of the battery 2f, and the other end is connected to the load portion side. The ground conductor 111a may be connected to the negative electrode side of the battery 2f via a metal body or the like of the vehicle 2.

The ground conductor covering portion 111b covers the ground conductor 111a. The ground conductor covering portion 111b is formed using an insulating material such as resin and covers the outer periphery of the ground conductor 111a. The ground conductor covering portion 111b is, for example, formed in the same shape and the same size as those of the electric wire conductor covering portion 110b. That is, the ground conductor covering portion 111b is formed in a flat shape, and a sectional shape thereof is formed in a rectangular shape having the same size as that of the electric wire conductor covering portion 110b. The ground conductor covering portion 111b covers the outer periphery of the ground conductor 111a and insulates the ground conductor 111a from the outside.

The communication trunk line 12 and the communication branch line 22 are configured to include a communication line 120 and the ground line 111. The communication line 120 and the ground line 111 are stacked and fixed along the stacking direction. The communication line 120 is configured to include a communication conductor 120a and a communication conductor covering portion 120b. As described above, the ground line 111 is configured to include the ground conductor 111a and the ground conductor covering portion 111b. The communication trunk line 12 and the communication branch line 22 constitute a microstrip line ML that transmits (propagates) a signal (electromagnetic wave).

The communication conductor 120a is a conductor to which a signal is transmitted, and is formed in an elongated and flat shape. The communication conductor 120a is configured to include a first communication conductor 120c and a second communication conductor 120d different from the first communication conductor 120c. The first communication conductor 120c and the second communication conductor 120d extend in an extending direction and are arranged side by side in the crossing direction crossing the extending direction. For example, each sectional shape of the first communication conductor 120c and the second communication conductor 120d is formed in a rectangular shape, and each outer periphery thereof is covered with the communication conductor covering portion 120b. The first communication conductor 120c and the second communication conductor 120d are insulatively stacked on the ground conductor 111a on the side opposite to the electric wire conductor 110a side. Each of the first communication conductor 120c and the second communication conductor 120d has one end connected to the connection terminal of the power supply control unit 2h and the other end connected to the connection terminal of the distributor 30.

The communication conductor covering portion 120b covers the first communication conductor 120c and the second communication conductor 120d. The communication conductor covering portion 120b is formed using an insulating material such as resin and covers each outer periphery of the first communication conductor 120c and the second communication conductor 120d. The communication conductor covering portion 120b is, for example, formed in a flat shape, and a sectional shape of the communication conductor covering portion 120b is formed in a rectangular shape. The communication conductor covering portion 120b covers each outer periphery of the first communication conductor 120c and the second communication conductor 120d and insulates the first communication conductor 120c and the second communication conductor 120d from the outside.

A part of the communication conductor covering portion 120b and a part of the ground conductor covering portion 111b are interposed between the ground conductor 111a and the communication conductor 120a (the first communication conductor 120c and the second communication conductor 120d). A part of each covering portion interposed between the ground conductor 111a and the communication conductor 120a constitutes a dielectric D1 of the microstrip line ML. The dielectric D1 has a predetermined dielectric constant in accordance with a characteristic impedance of the microstrip line ML. The microstrip line ML is configured to include the communication conductor 120a, the dielectric D1, and the ground conductor 111a. In the microstrip line ML, design matters such as sizes of the communication conductor 120a, the dielectric D1, and the ground conductor 111a can be obtained by well-known calculation formulas. The microstrip line ML performs differential transmission of transmitting a signal using a potential difference between conductors caused by flow of currents having mutually opposite phases by the first communication conductor 120c and the second communication conductor 120d. The microstrip line ML is, for example, a transmission path assuming a communication speed of 1 Gbps or higher, and can be applied to, for example, a controller area network (CAN) or the like. The microstrip line ML of the communication trunk line 12 transmits the command signal output from the power supply control unit 2h to each of the distributors 30. The wire harness 1 is installed on an installation surface of the vehicle 2 with the power line 110 on the lower side in the height direction. As a result, the wire harness 1 can suppress influence of noise received by the communication line 120 from the installation surface of the vehicle 2.

As described above, the wire harness 1 according to the first embodiment includes the electric wire conductor 110a, the ground conductor 111a, the communication conductor 120a, and the dielectric D1. The electric wire conductor 110a is formed in an elongated and flat shape, extends along the extending direction, and has one end connected to the positive electrode side of the battery 2f. A ground conductor 111a is formed in an elongated and flat shape, extends along the extending direction, is insulatively stacked on the electric wire conductor 110a, and has one end connected to the negative electrode side of the battery 2f. The communication conductor 120a is formed in an elongated shape, extends along the extending direction, and is insulatively stacked on the ground conductor 111a on the side opposite to the electric wire conductor 110a side. The dielectric D1 is provided between the communication conductor 120a and the ground conductor 111a and has a predetermined dielectric constant. The communication conductor 120a, the dielectric D1, and the ground conductor 111a constitute the microstrip line ML capable of transmitting the signal.

With this configuration, the wire harness 1 can use the ground conductor 111a, which is used for the battery 2f, also as a conductor of the microstrip line ML. With this configuration, the wire harness 1 can be made thin since there is no need to separately provide a conductor dedicated for the microstrip line ML. As a result, the wire harness 1 can realize space saving of the power supply trunk line 11 (the power supply branch line 21) and the communication trunk line 12 (the communication branch line 22). In addition, the wire harness 1 can be made lightweight so that the wiring performance can be improved. Since the electric wire conductor 110a and the ground conductor 111a are formed in the same flat shape in the wire harness 1, the workability when stacking and assembling the respective conductors can be improved.

In the above wire harness 1, the microstrip line ML is mounted on the vehicle 2 and is configured to include the trunk line 10 extending in the front-rear direction of the vehicle 2 and the branch line 20 branching from the trunk line 10 and extending in the direction crossing the front-rear direction. With this configuration, the wire harness 1 can be applied to a so-called power supply backbone of the vehicle 2, and the space saving of the power supply backbone can be realized.

In the above wire harness 1, the communication conductor 120a is configured to include the first communication conductor 120c and the second communication conductor 120d different from the first communication conductor 120c. The first communication conductor 120c and the second communication conductor 120d are arranged side by side in the direction crossing the extending direction and perform the differential transmission of transmitting the signal using the potential difference between conductors caused by the flow of currents having mutually opposite phases. The wire harness 1 can suppress the influence of noise by performing the differential transmission.

### Second Embodiment

Next, a wire harness 1A according to a second embodiment will be described. The wire harness 1A according to the second embodiment is different from the wire harness 1 according to the first embodiment in that a signal is transmitted by a strip line SL. In the second embodiment, the same constituent elements as those of the first embodiment will be denoted by the same reference signs, and a detailed description thereof will be omitted.

In the wire harness 1A according to the second embodiment, the power supply trunk line 11 is configured to include the power line 110 and a first ground line 112.
The power line 110 and the first ground line 112 are stacked and fixed along the stacking direction. The power line 110 is configured to include the electric wire conductor 110a and the electric wire conductor covering portion 110b, and the first ground line 112 is configured to include a first ground conductor 112a and a first ground conductor covering portion 112b.

In the wire harness 1A according to the second embodiment, the communication trunk line 12 is configured to include the communication line 120, the first ground line 112, and a second ground line 113. The communication line 120 and the first ground line 112 are stacked and fixed from one side along the stacking direction. The communication line 120 and the second ground line 113 are stacked and fixed from the other side (the side opposite to the first ground line 112) along the stacking direction. The communication line 120 is configured to include a communication conductor 120a and a communication conductor covering portion 120b. The first ground line 112 is configured to include the first ground conductor 112a and the first ground conductor covering portion 112b. The second ground line 113 is configured to include a second ground conductor 113a and a second ground conductor covering portion 113b. The communication trunk line 12 and the communication branch line 22 constitute the strip line SL that transmits (propagates) a signal (electromagnetic wave).

A part of the first ground conductor covering portion 112b, a part of the second ground conductor covering portion 113b, and the communication conductor covering portion 120b are interposed between the first ground conductor 112a and the second ground conductor 113a. The respective covering portions interposed between the first ground conductor 112a and the second ground conductor 113a constitute a dielectric D2 of the strip line SL. The dielectric D2 has a predetermined dielectric constant in accordance with a characteristic impedance of the strip line SL. The strip line SL is configured to include the communication conductor 120a, the dielectric D2, the first ground conductor 112a, and the second ground conductor 113a. In the strip line SL, design matters such as sizes of the communication conductor 120a, the dielectric D2, the first ground conductor 112a, and the second ground conductor 113a can be obtained by well-known calculation formulas. The strip line SL performs differential transmission of transmitting a signal using a potential difference between conductors caused by flow of currents having mutually opposite phases by the first communication conductor 120c and the second communication conductor 120d. The strip line SL is, for example, a transmission path assuming a communication speed of 1 Gbps or higher, and can be applied to, for example, a CAN or the like. The strip line SL transmits a command signal output from the power supply control unit 2h to each of the distributors 30. The wire harness 1A is installed on an installation surface of the vehicle 2 with the power line 110 or the communication line 120 on a lower side in the height direction. Since the wire harness 1A has the first ground conductor 112a and the second ground conductor 113a on both the sides in the stacking direction, respectively, it is possible to suppress the influence of noise received by the communication line 120 from the installation surface of the vehicle 2 even if the wire harness 1A is installed on the installation surface of the vehicle 2 with either the power line 110 or the communication line 120 on the lower side.

As described above, the wire harness 1A according to the second embodiment includes the electric wire conductor 110a, the first ground conductor 112a, the communication conductor 120a, the second ground conductor 113a, and the dielectric D2. The electric wire conductor 110a is formed in an elongated and flat shape, extends along the extending direction, and has one end connected to the positive electrode side of the battery 2f. The first ground conductor 112a is formed in an elongated and flat shape, extends along the extending direction, is insulatively stacked on the electric wire conductor 110a, and has one end connected to the negative electrode side of the battery 2f. The communication conductor 120a is formed in an elongated shape, extends along the extending direction, and is insulatively stacked on the first ground conductor 112a on the side opposite to the electric wire conductor 110a side. The second ground conductor 113a is formed in an elongated and flat shape, extends along the extending direction, is insulatively stacked on the communication conductor 120a on the side opposite to the first ground conductor 112a side, and has one end connected to the negative electrode side of the battery 2f. The dielectric D2 is provided between the first ground conductor 112a and the second ground conductor 113a and has a predetermined dielectric constant. The communication conductor 120a, the dielectric D2, the first ground conductor 112a, and the second ground conductor 113a constitute the strip line SL capable of transmitting the signal.

With this configuration, the wire harness 1A can use the ground conductor 111a, which is used for the battery 2f, also as a conductor of the strip line SL. With this configuration, the wire harness 1A can be made thin since there is no need to separately provide a conductor dedicated for the strip line SL. As a result, the wire harness 1A can realize space saving of the power supply trunk line 11 (the power supply branch line 21) and the communication trunk line 12 (the communication branch line 22). In addition, the wire harness 1A can be made lightweight so that the wiring performance can be improved. Since the electric wire conductor 110a, the first ground conductor 112a, and the second ground conductor 113a are formed in the same flat shape in the wire harness 1A, the workability when stacking and assembling the respective conductors can be improved. In addition, since the wire harness 1A performs communication with the strip line SL, it is possible to further suppress the influence of noise as compared with the case of using the microstrip line ML.

In the above wire harness 1A, the strip line SL is mounted on the vehicle 2 and is configured to include the trunk line 10 extending in the front-rear direction of the vehicle 2 and the branch line 20 branching from the trunk line 10 and extending in the direction crossing the front-rear direction. With this configuration, the wire harness 1A can be applied to a so-called power supply backbone of the vehicle 2, and the space saving of the power supply backbone can be realized.

In the above wire harness 1A, the communication conductor 120a is configured to include the first communication conductor 120c and the second communication conductor 120d different from the first communication conductor 120c. The first communication conductor 120c and the second communication conductor 120d are arranged side by side in the direction crossing the extending direction and perform the differential transmission of transmitting the signal using the potential difference between conductors caused by the flow of currents having mutually opposite phases. The wire harness 1A can suppress the influence of noise by performing the differential transmission.

### Modified Example

Next, a modified example of the embodiment will be described. Although the wire harnesses 1 and 1A are applied to the so-called power supply backbone of the vehicle 2, the wire harnesses 1 and 1A are not limited thereto, and may be applied in other modes.

In addition, the microstrip line ML and the strip line SL may perform single-end transmission of transmitting a signal by the single communication conductor 120a without being limited to the differential transmission.

In addition, in the case of using a plurality of the microstrip lines ML, the wire harness 1 may arrange the microstrip lines ML side by side in the crossing direction. Similarly, in the case of using a plurality of the strip lines SL, the wire harness 1A may arrange the strip lines SL side by side in the crossing direction.

A wire harness according to the present embodiment can realize the space saving of the power line and the communication line since a ground conductor used for the power supply can also be used as a conductor of a microstrip line or a strip line.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A wire harness (1) comprising:
an electric wire conductor (110a) that is formed in an elongated and flat shape, extends along an extending direction, and has one end connected to a positive electrode side of a power supply (2f);
a ground conductor (111a) that is formed in an elongated and flat shape, extends along the extending direction, insulatively stacked on the electric wire conductor (110a), and has one end connected to a negative electrode side of the power supply (2f);
a communication conductor (120a) that is formed in an elongated shape, extends along the extending direction, and is insulatively stacked on the ground conductor (111a) on a side opposite to a side of the electric wire conductor (110a); and
a dielectric (D1) that is provided between the communication conductor (120a) and the ground conductor (111a) and has a predetermined dielectric constant, wherein
the communication conductor (120a), the dielectric (D1), and the ground conductor (111a) constitute a microstrip line (ML) capable of transmitting a signal.

2. The wire harness (1) according to claim 1, wherein
the microstrip line (ML) is configured to include a trunk line (10) mounted on a vehicle (2) and extending in a front-rear direction of the vehicle (2) and a branch line (20) branching from the trunk line (10) and extending in a direction crossing the front-rear direction.

3. The wire harness (1) according to claim 1 or 2, wherein
the communication conductor (120a) is configured to include a first communication conductor (120c) and a second communication conductor (120d) different from the first communication conductor (120c), and
the first communication conductor (120c) and the second communication conductor (120d) are arranged side by side in a direction crossing the extending direction and perform differential transmission to transmit a signal using a potential difference between the conductors caused by flow of currents having mutually opposite phases.

4. A wire harness (1A) comprising:
an electric wire conductor (110a) that is formed in an elongated and flat shape, extends along an extending direction, and has one end connected to a positive electrode side of a power supply (2f);
a first ground conductor (112a) that is formed in an elongated and flat shape, extends along the extending direction, insulatively stacked on the electric wire conductor (110a), and has one end connected to a negative electrode side of the power supply (2f);
a communication conductor (120a) that is formed in an elongated shape, extends along the extending direction, and is insulatively stacked on the first ground conductor (112a) on a side opposite to a side of the electric wire conductor (110a);
a second ground conductor (113a) that is formed in an elongated and flat shape, extends along the extending direction, is insulatively stacked on the communication conductor (120a) on a side opposite to a side of the first ground conductor (112a), and has one end connected to the negative electrode side of the power supply (2f); and
a dielectric (D2) that is provided between the first ground conductor (112a) and the second ground conductor (113a) and has a predetermined dielectric constant,
wherein
the communication conductor (120a), the dielectric (D2), the first ground conductor (112a), and the second ground conductor (113a) constitute a strip line (SL) capable of transmitting a signal.

5. The wire harness (1A) according to claim 4, wherein
the strip line (SL) is configured to include a trunk line (10) mounted on a vehicle (2) and extending in a front-rear direction of the vehicle (2) and a branch line (20) branching from the trunk line (10) and extending in a direction crossing the front-rear direction.

6. The wire harness (1A) according to claim 4 or 5, wherein
the communication conductor (120a) is configured to include a first communication conductor (120c) and a second communication conductor (120d) different from the first communication conductor (120c), and
the first communication conductor (120c) and the second communication conductor (120d) are arranged side by side in a direction crossing the extending direction and perform differential transmission to transmit a signal using a potential difference between the conductors caused by flow of currents having mutually opposite phases.
